# EUROPEAN PATENT APPLICATION

(11) **EP 1 327 982 A1**
(43) Date of publication of application: **16.07.2003**
(21) Application number: 03250028.2
(22) Date of filing: 06.01.2003
(51) Int. Cl.: G11B 20/00, H04N 5/913

(54) **Data playback apparatus and method**

(30) Priority: 10.01.2002 JP 2002003333
(71) Applicant: SONY CORPORATION, Tokyo 141 (JP)
(72) Inventor: Kitani, Satoshi, Shinagawa-ku, Tokyo (JP)
(74) Representative: Horner, David Richard

(57) **Abstract**

A data playback apparatus for playing back a recording medium in which a signal having digital watermark information embedded therein is recorded, the digital watermark information including copy control information, includes a reading unit, a signal detection unit, and a digital watermark information detection unit. The reading unit reads a signal from the recording medium. The signal detection unit determines whether or not the signal read by the reading means is the signal having digital watermark information embedded therein. When the start of the signal having digital watermark information embedded therein is detected by the signal detection unit, the digital watermark information detection unit detects the digital watermark information using the detected start as a trigger.

## Description

### BACKGROUND OF THE INVENTION

The present invention relates to a signal playback control technique for a medium which contains digital watermark information including copy control information for preventing illegal copy.

Recent recording media such as DVDs (digital versatile discs) are capable of recording a large volume of video information as digital data, and, for example, video information corresponding to one movie can be recorded in a single recording medium. With the ability to record information, such as video information, as digital information, it is increasingly important to provide technology for protecting copyright holders against illegal copy.

A technique for preventing illegal copy of video information is disclosed in, for example, Japanese Unexamined Patent Application Publication No. 11-155125. In the technique disclosed in this publication, when copy control information identified from digital watermark information embedded in a video signal indicates copy-prohibited information, reproduction of information read from a disc is prohibited by a playback apparatus so as not to output the information to a recording apparatus from the playback apparatus.

In playback apparatuses in the related art, however, detectable digital watermark information must always be embedded in video signals, and data must be stored in a buffer memory provided for supporting high disk rotation speed or adjusting a data transfer rate.

For example, when the location of digital watermark embedded in a video signal is unknown, digital watermark detection processing must be necessarily performed, thus increasing load on signal processing or resulting in an influence on video signal processing.

In DVD players which ensure the continuity of video information when a video signal is played back, digital watermark information embedded in the video signal can be detected in normal use. However, some apparatuses for use in personal computers, such as a drive apparatus capable of playing back DVDs, do not ensure the continuity of data. For example, in a disk drive apparatus accessed by a host computer, the continuity of data cannot be ensured in normal use. In such cases, it is necessary to process the video signal while maintaining the minimum data amount in order to detect digital watermark information embedded in video information. Otherwise, the digital watermark information cannot be detected, and copy control or playback control aimed at by digital watermarking would not be accomplished.

In a method of temporarily storing contiguous read data in a buffer memory before digital watermark detection, a data amount necessary for the detection can always be ensured. However, an apparatus without a data storage unit would not be able to effectively detect digital watermark information. Also, software may appear which is adapted to deliberately disable digital watermark detection with abuse of the functionality of a drive.

### SUMMARY OF THE INVENTION

An Embodiment of the present invention providesan arrangement which allows digital watermark information including copy control information to be detected irrespective of the format in which the digital watermark information is embedded in a signal such as a video signal, or irrespective of whether or not data is stored in a buffer memory or the like.

Further, an embodiment of the present invention providesan arrangement which enables copy protection using the embedded digital watermark information.

In one aspect of the present invention, there is provided a data playback apparatus for playing back a recording medium in which a signal having digital watermark information embedded therein is recorded, the digital watermark information including copy control information,the apparatus including a reading unit, a signal detection unit, and a digital watermark information detection unit. The reading unit reads a signal from the recording medium. The signal detection unit determines whether or not the signal read by the reading unit is the signal having digital watermark information embedded therein. When the start of the signal having digital watermark information embedded therein is detected by the signal detection unit, the digital watermark information detection unit detects the digital watermark information.

In another aspect of the present invention, there is provided a data playback apparatus for playing back a recording medium in which a signal having digital watermark information embedded therein is recorded, the digital watermark information including copy control information, the apparatus including a signal detection unit, a digital watermark information detection unit, and a restriction unit. The signal detection unit determines whether or not a signal read from the recording medium is a video or audio signal. When a video or audio signal is detected by the signal detection unit, the digital watermark information detection unit detects the digital watermark information from the signal. The restriction unit prohibits or restricts outputting or transferring the video or audio signal based on the copy control information included in the detected digital watermark information.

In still another aspect of the present invention, there is provided a data playback method of reading and playing back data from a recording medium in which a signal having digital watermark information embedded therein is recorded, the digital watermark information including copy control information, the method including a reading step of reading a signal from the recording medium; a signal detecting step of determining whether or not the read signal is the signal having digital watermark information embedded therein; and a digital watermark information detecting step of detecting the digital watermark information when the start of the signal having digital watermark information embedded therein is detected in the signal detecting step.

In still another aspect of the present invention, there is provided data playback method of playing back a recording medium in which a signal having digital watermark information embedded therein is recorded, the digital watermark information including copy control information, the method including a signal detecting step of determining whether or not a signal read from the recording medium is a video or audio signal; a digital watermark information detecting step of detecting the digital watermark information from the signal when a video or audio signal is detected in the signal detecting step; and a restricting step of prohibiting or restricting outputting or transferring the video or audio signal based on the copy control information included in the detected digital watermark information.

According to embodiments of the present invention, therefore, when the start of a signal having digital watermark information embedded therein is detected, the digital watermark information can be detected using the detected start as a trigger. Thus, the processing load caused by digital watermark detection can be reduced, and the digital watermark information can be reliably detected without storing data in a buffer memory, irrespective of the format in which the digital watermark information is embedded.

Furthermore, a data amount necessary for detecting the digital watermark information can be maintained to reliably perform the processing.

Furthermore, copy control or playback control based on the copy control information can be performed according to the type of recording media or whether or not information concealment processing is applied, thus ensuring prevention of illegal copy.

Furthermore, reproduction of signals is prohibited or restricted based on the copy control information included in the digital watermark information, thus preventing illegal copy by an external device, etc., connected to the data playback apparatus. Therefore, reliable copy protection using the digital watermark information can be achieved.

Furthermore, when a video or audio signal having digital watermark information embedded therein is detected, the digital watermark information can be detected to obtain copy control information therefrom. The copy control information can be used for playback or copy control.

Furthermore, if the video or audio signal has been encrypted or scrambled, the information content can be concealed without restrictions on outputting, etc.

Furthermore, playback of writable media can be prohibited.

Furthermore, restrictions on copy or playback can be made based on the content of the copy control information.

Further particular and preferred aspects of the present invention are set out in the accompanying independent and dependent claims. Features of the dependent claims may be combined with features of the independent claims as appropriate, and in combinations other than those explicitly set out in the claims.

### BRIEF DESCRIPTION OF THE DRAWINGS

The present invention will be described further, by way of example only, with reference to preferred embodiments thereof as illustrated in the accompanying drawings, in which:
Fig. 1 is a block diagram of the hardware configuration of a data playback apparatus according to an embodiment of the present invention;
Fig. 2 is a diagram illustrating a read-ahead operation;
Fig. 3 is a flowchart showing a procedure for detecting the start of an MPEG video sequence:
Fig. 4 is a diagram illustrating the read-ahead operation when copy control information indicates "copy never";
Fig. 5 is a diagram illustrating the read-ahead operation when copy control information indicates "copy free";
Fig. 6 is a diagram illustrating data transfer restrictions;
Fig. 7 is a flowchart showing a procedure of identifying a recording medium and the operation of a watermark detector;
Fig. 8 is a block diagram of a data transfer controller; and
Fig. 9 is a block diagram of the hardware configuration of a playback apparatus in which a buffer memory is not used to detect digital watermark information.

### DESCRIPTION OF THE PREFERRED EMBODIMENTS

Embodiments of the present invention are directed to a data playback apparatus (information playback apparatus) for playing back a recording medium in which digital watermark information including copy control information for preventing illegal copy is recorded as an embedded signal. An embodiment of the present invention is suitably applied to a random-access data playback apparatus to detect digital watermark information embedded in a bit stream (or data stream) or to achieve copy control or playback control based on copy control information included in the digital watermark information. In embodiments of the present invention, a variety of recording media may be used, including disc-type recording media, tape-type recording media, and semiconductor memories. The copy control information (or copy managing information) contains information required for copy control or playback control, such as copy-permitted information, copy-prohibited information, and copy-restricted information.

As discussed above, in a disk drive apparatus accessed by a host computer or the like, the continuity of information is not ensured during a playback process. More specifically, a host computer has the capability to read data in units of one sector (two kilobytes (KB)) from a disk drive apparatus, whereas a signal is decoded from a disc in units of one ECC (Error Correction Code) block, i.e., 32 KB, when the disc is implemented as a digital video medium such as a DVD (digital versatile disc), and is then stored in a buffer memory for transfer to the host. When video information is played back, the host computer reads the video information in a sequential manner. Since the host computer typically incorporates a multitask operating system (OS), data of another address in the same disc can be accessed during sequential read of this video information. In this case, the video information is sliced every 32 KB at least in the ECC decoder, and is sliced every 2 KB in the host, thus impairing the continuity of the video information. Generally, digital watermark information embedded in video information must be processed per frame, and about 2-MB data must be maintained after ECC decoded in order to extract I-picture of one frame when I-picture contained in the transport stream (TS) or program stream (PS) of an MPEG (Moving Picture Experts Group)-2 video sequence is detected.

Therefore, when video information recorded in a video medium is played back by a personal computer or the like incorporating a multitask OS, digital watermark information may be undetectable, and copy control or playback control aimed at by digital watermarking may not be accomplished.

According to embodiments of the present invention, digital watermark information can be reliably detected to obtain copy control information when the continuity of playback information is not ensured, so that copy control or playback control based on the copy control informationcan be accomplished. In embodiments of the present invention, embedded digital watermark information of a recording medium is not necessarily detectable, and data is not necessarily stored in a buffer memory. That is, data storage to a buffer memory is not essential. In addition, digital watermark information can be retrieved using, for example, the start code of an MPEG video sequence as a trigger, and there is no demerit of reducing the performance of a recording medium intended for data purpose rather than for video purpose.

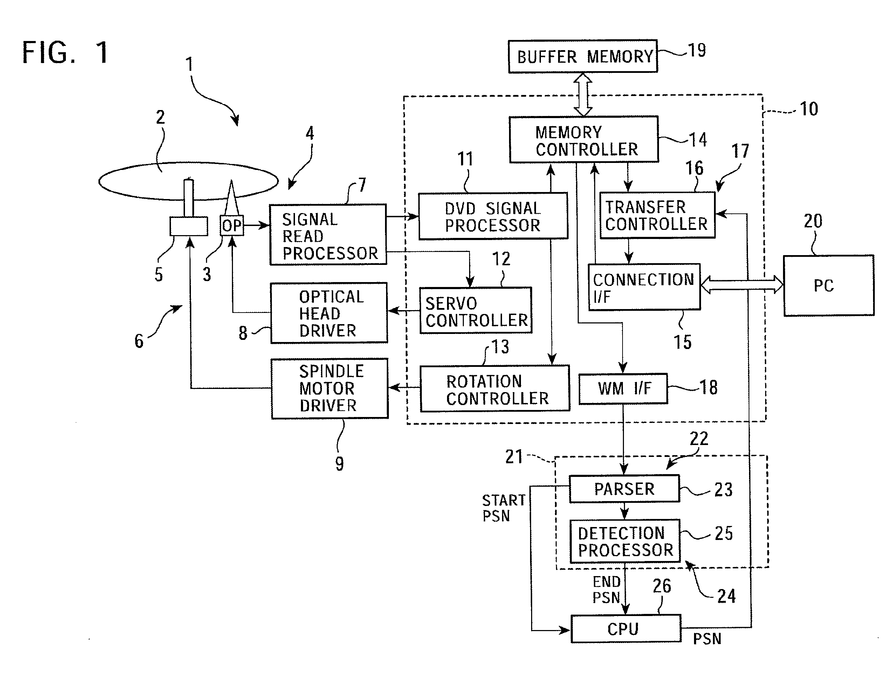

Fig. 1 illustrates the configuration of a data playback apparatus 1 having a mechanism for detecting digital watermark information, and is applied to a disk drive apparatus. As discussed above, although use of a data storage unit to detect digital watermark information is not essential in the present invention, the data playback apparatus 1 shown in Fig. 1 incorporates a buffer memory.

In a drive apparatus constructing the data playback apparatus 1, a recording medium 2 is assumed herein to be of the disc type and to be a DVD medium. Examples of discs to be played back include a disc protected by CSS (Content Scrambling System), an illegally copied disc, a disc made by a user, and a legally accepted copy disc for private use only.

An optical head 3 comprises a reading unit 4 for reading a signal from the recording medium 2, and includes an objective lens (not shown), and a two-axis actuator (not shown) for driving the objective lens. Although not shown in Fig. 1, as known to those skilled in the art, the optical head 3 further includes a laser diode as a laser light source, a photodetector, a feed mechanism (called a sled mechanism) for feeding the optical head 3, a drive source for driving the feed mechanism, and a mechanism for loading a disc tray.

A spindle motor 5 constructs a spindle mechanism for rotating a disc. When a disc is placed on a turntable fixed to the rotational shaft of the spindle motor 5, the disc is rotated. The spindle motor 5 and a driving circuit described below construct a rotation mechanism 6 for the recording medium 2.

A signal read processor 7 directly processes a signal obtained from the optical head 3. The signal read processor 7 and the optical head 3 construct the reading unit 4. In the signal read processor 7, various signals such as an EFM Plus (8/16 modulated) signal read from DVD, a servo control FE (focus error) signal, a TE (tracking error) signal, and a pull-in signal are generated from an RF (radio frequency) signal obtained by the optical head 3.

An optical head driver 8 is provided for focus or tracking control when the objective lens is driven, for sled control when the reading point of the optical head 3 moves with respect to the recording medium 2, for loading control, etc. The optical head driver 8 is formed of a driver IC (drive circuit) for driving motors or coils which are drive sources of the control systems.

A spindle motor driver 9 drives the spindle motor 5, and is formed of a driver IC.

A DVD decoder 10 is a main circuit for playback signal processing, and includes a DVD signal processor 11, a servo controller 12, a disc rotation controller 13, a memory controller 14, an external connection interface 15, a data transfer controller 16, a watermark interface 18, and a buffer memory 19. The functions of these components are received in a single semiconductor package.

The DVD signal processor 11 includes an RS-PC (Reed-Solomon Product-code) encoder, an RS-PC decoder, an ID (identification) processor for detecting an address, an 8/16 modulator, and a wobble detector for determining whether or not a medium to be processed is a recordable medium. The 32-KB data output from the DVD signal processor 11 is passed to the memory controller 14, and is further sent to the buffer memory 19 for storage. This output data is further transferred to a watermark detector 21 via the watermark interface 18, as described below.

The servo controller 12 processes a servo control signal for focus control, tracking control, and sled control, and has a loading control function. In response to the above-noted FE signal, TE signal, pull-in signal, etc., the servo controller 12 generates signals necessary for the respective controls, and sends the generated signals to the optical head driver 8.

The disc rotation controller 13 controls to rotate a disc in response to a signal from the DVD signal processor 11. The output of the disc rotation controller 13 is sent to the spindle motor driver 9.

The memory controller 14 has an arbitration function of arbitrating memory access of the DVD signal processor 11, the external connection interface 15, and the watermark interface 18. The memory controller 14 controls to store and read data to and from the buffer memory 19.

The external connection interface 15 interfaces with a host computer (host PC) 20, and is implemented as, for example, ATAPI (AT attachment packet interface).
Alternatively, the external connection interface 15 may be implemented as SCSI (small computer system interface), USB (universal serial bus), or IEEE1394 interface.

The data transfer controller 16 is placed between the memory controller 14 and the external connection interface 15, and has the function of restricting data transfer based upon an instruction from a CPU (central processing unit) 26, described below. The data transfer controller 16 and the CPU 26 construct a restriction unit 17 adapted to prohibit or restrict outputting or transferring video or audio signals.

The watermark interface 18 connects the DVD decoder 10 to the watermark detector 21, and data is transmitted to the watermark detector 21 via the watermark interface 18.

The buffer memory 19 is used for data transfer between the DVD signal processor 11 and the host computer 20. The 32-KB data read from the disc 2 is temporarily stored in the buffer memory 19.

The host computer 20 is connected to the data playback apparatus 1 so as to communicate therebetween via the external connection interface 15.

In Fig. 1, interface and watermark are represented by "I/F" and "WM" for short, respectively.

The details of the watermark detector 21 are now described.

The watermark detector 21 constructs a digital watermark detection unit, and includes a signal detection unit 22 for detecting a signal having digital watermark information embedded therein, and a digital watermark information detection unit 24 for, when the start of a signal with embedded digital watermark information is detected, detecting the digital watermark information from the following portion. The signal detection unit 22 is formed of an MPEG parser 23 and the CPU 26. The digital watermark information detection unit 24 is formed of a WM detection processor 25 and the CPU 26. The watermark detector 21 operates under control of the CPU 26.

The MPEG parser 23 is adapted to detect the MPEG start code or extract an MPEG video bit stream, and receives data from the watermark interface 18. The parser 23 generates an interrupt signal based on the detected MPEG start code, and sends the signal to the CPU 26.

The WM detection processor 25 processes a digital watermark detection signal. When digital watermark detection ends or when the digital watermark information is determined to be undetectable, the WM detection processor 25 generates an interrupt signal and sends the signal to the CPU 26, or sets the digital watermark information in a register, thereby enabling the CPU 26 to perform a read operation.

The CPU 26 is provided for various controls of the data playback apparatus 1 or for determination on the digital watermark information, and serves as a control center. The CPU 26 further sends a control signal to the data transfer controller 16, as described in detail below.

The sequence of reading data performed in the data playback apparatus 1 is now described.

When an optical disc is inserted in the data playback apparatus 1, the disc is rotated by the spindle motor 5, and a focus error signal and a tracking error signal are sent to the servo controller 12 via the signal read processor 7 by the optical head 3. The control signals generated by the servo controller 12, such as a focus control signal, a tracking control signal, and a sled control signal, are sent to the optical head driver 8 to amplify the signals, and are further sent to the optical head 3, thus forming a feedback control loop.

The signal read from the optical disc by the optical head 3 is passed through the signal read processor 7, thus providing a stable EFM Plus signal. In order to obtain data readable to the DVD signal processor 11 from the EFM Plus signal, a readout signal clock is sent to the disc rotation controller 13 to generate a spindle control signal. The spindle control signal is amplified by the spindle motor driver 9, and the resulting signal is passed to the spindle motor 5. Thus, a spindle PLL (phase-locked loop) is formed, resulting in stable data extraction in the DVD signal processor 11.

The data recorded in the optical disc is read in response to a request from the host computer 20. The host computer 20 issues a READ command to the data playback apparatus 1 via the external connection interface (ATAPI I/F) 15. The READ command includes the logical block address (LBA) of the data recorded in the optical disc and information (parameter value) indicating the transfer length of 2-KB data. The READ command is interpreted by the CPU 26, and, as a result, the servo controller 12 is driven to move the optical head 3 to sequentially read data from the specified LBA on the optical disc. The DVD signal processor 11 urges the read data to be stored in the buffer memory 19 as one-ECC-block (32-KB) data and also to be transferred to the host computer 20 via the external connection interface 15. At the time when the data of the specified transfer length is transferred, issuance of the READ command from the host computer 20 terminates.

In this process, the one-ECC-block (32-KB) data stored in the buffer memory 19 is also sent to the watermark detector 21 to detect digital watermark information. The detected digital watermark information is sent to the CPU 26 to determine copy control information carried on the digital watermark. When it is determined that the copy control information indicates any of "copy once", "copy no more", and "copy never", the executed READ command is terminated due to error, and the subsequent READ commands are also terminated due to error. Then, the data readout is regarded as illegal copy, thereby disabling readout of the data recorded in the optical disc.

However, as discussed above, data of a predetermined number of contiguous blocks (ECC blocks) is required for detecting digital watermark information. That is, when READ commands including the transfer length of too small unit of data and discontinuous LBAs are issued from the host computer 20, discontinuous ECC block data which is sliced into small pieces is input to the watermark detector 21. This makes the digital watermark detection invalid.

In order to avoid such an inconvenience, data read-ahead operation is used. The read-ahead function is incorporated in most drive apparatuses.

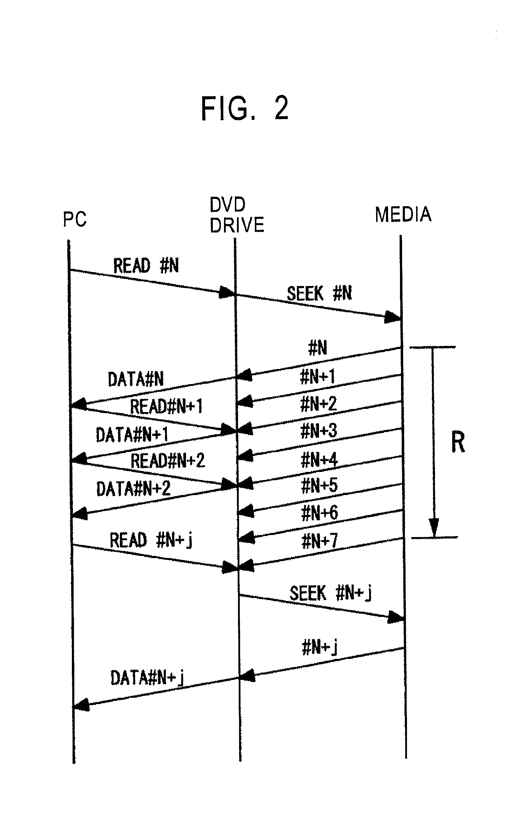

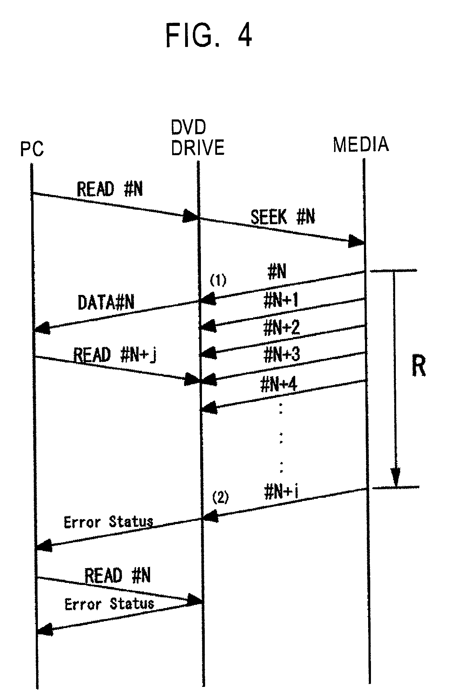

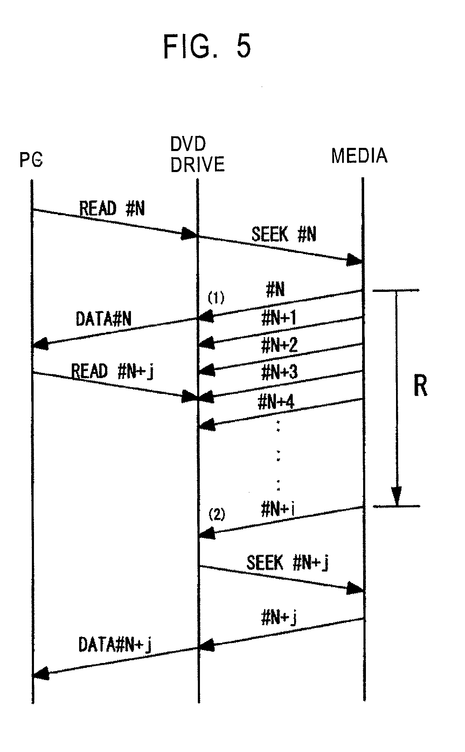

Fig. 2 illustrates typical read-ahead operation. In Fig. 2, "PC" represents the host computer 20, "DVD Drive" represents the data playback apparatus 1, and "Media" represents the recording medium 2 (a DVD in this example), showing data control flows between these three devices as indicated by arrows. The same applies to Figs. 4 and 5 described below.

When the data playback apparatus (drive apparatus) 1 receives from the host computer 20 a READ command in which a certain LBA is specified, ECC block data are automatically stored in a continuous manner starting from the LBA until the quantity (or range) which the buffer memory 19 allows.

When subsequent READ commands in which LBAs are continuously specified are issued from the host computer 20, data requested by the subsequence READ commands are stored in the buffer memory 19 of the data playback apparatus 1, thus allowing the data to be transferred immediately in response to the READ commands, thus increasing the performance. In other words, there is no need for accessing the recording medium 2 to read data each time a data readout request is issues.

In the example shown in Fig. 2, a readout request "READ #N" of sector number "#N" is issued from the host computer 20 to the drive apparatus 1, and, in response to the request, the drive apparatus 1 performs a seek operation ("SEEK #N") to read ahead seven sectors subsequent to the N-th sector. Thus, in a range indicated by an arrow R, data of sector number #N to #N+7 are read and stored in the buffer memory 19. This range corresponds to a period from the time at which the read-ahead operation starts to the time at which the read-ahead operation ends. The read-ahead operation ends when no data is hit in read-ahead cache or when the buffer memory 19 is full of data.

During this operation, the data of requested sector number #N, as indicated by DATA #N, is passed from the drive apparatus 1 to the host computer 20. Since data corresponding to subsequent readout requests "READ #N+1" and "READ #N+2" is stored in the buffer memory 19, the data is transmitted as "DATA #N+1" and "DATA #N+2" to the host computer 20 without necessity to access the disc 2.

When readout request "READ #N+j" requesting data which does not reside in the read-ahead range R is received by the drive apparatus 1, the disc is accessed in seek operation "SEEK #N+j", and data "DATA #N+j" is transmitted from the drive apparatus 1 to the host computer 20.

In Fig. 1, when the MPEG parser 23 detects the start of an MPEG video sequence, the above-described read-ahead operation is performed, and contiguous data is input to the watermark detector 21. Also during the read-ahead operation, when a READ command of the data stored in the buffer memory 19 is issued from the host computer 20, the data is transferred. However, when the data requested in a READ command from the host computer 20 is not stored in the buffer memory 19, the data is not read from the optical disc 2 in response to that READ command until the digital watermark detection performed by the detection processor 25 ends or until the digital watermark is determined to be undetectable due to timeout or the like.

Therefore, when the start of a signal is detected, sequentially read signals (data) are transferred to the detection processor 25 until digital watermark detection based on that signal ends or until the digital watermark information is determined to be undetectable.

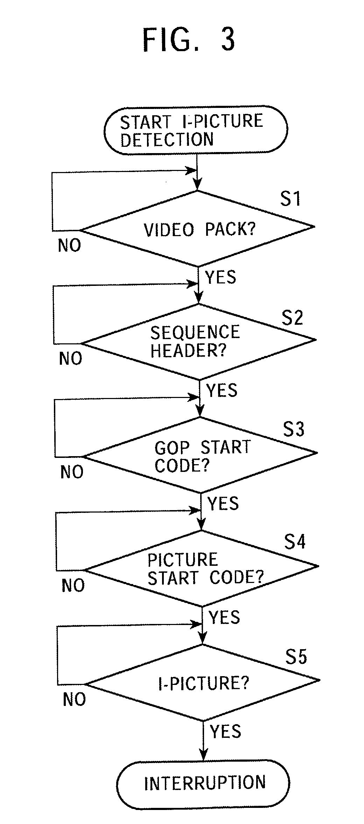

Fig. 3 illustrates a procedure of detecting the start of an MPEG video sequence which is executed by the parser 23. The procedure shown in Fig. 3 is suited for the MPEG data structure.

As shown in Fig. 3, in step S1 first, the pack type is determined. If a video pack is determined in step S1 the procedure proceeds to step S2. When the sequence header is detected in step S2, the procedure proceeds to step S3.

When the GOP start code is detected in step S3, the procedure proceeds to step S4, in which it is determined whether or not the picture start code is present. If the picture start code is present, it is determined in step S5 whether or not the picture start code indicates an I-picture, or a portion in which digital watermark information is embedded. The term "GOP" or Group Of Pictures means a higher-layer processing unit having a combination of I-, P-, and B-pictures for enabling random access in MPEG. An I-picture or intra coded picture is encoded with intra-frame information alone.

If an affirmative determination is obtained in each of steps S1 through S5, and the start of the MPEG video sequence is detected, the detection is immediately notified to the CPU 26 by an interrupt signal or the like. At the same time, the digital watermark detection processing performed by the detection processor 25 starts. End of the digital watermark detection processing performed by the detection processor 25 is also notified to the CPU 26 by an interrupt signal or the like. According to these interrupt signals, the CPU 26 controls the decoder 10 to promote the above-described read-ahead operation.

If a negative determination is obtained in each of steps S1 through S5, the same processing is repeated.

Fig. 4 illustrates the read-ahead operation when the copy control information obtained from the digital watermark information indicates "copy never". When the digital watermark information indicates "copy once" or "copy no more", similar operation is performed.

Upon readout request "READ #N" from the host computer 20, data of requested sector number #N is passed from the drive apparatus 1 to the host computer 20. In Fig. 4, watermark detection starts at time (1), and this detection ends at time (2) to determine that the copy control information indicates "copy never". During this period, the read-ahead operation is performed, and data of sector number #N through #N+i is passed from the disc 2 to the drive apparatus 1. It is assumed herein that the read-ahead operation is performed until the watermark detection ends or until the detection is terminated due to timeout.

Since error status information ("Error Status") is returned to the host computer 20 in response to readout request "READ #N+j", the corresponding data "DATA #N" is not transmitted in response to the subsequent readout requests "READ #N", and only the error status information is transmitted to the host computer 20.

Fig. 5 illustrates the read-ahead operation when the copy control information obtained from the digital watermark information indicates "copy free". When the digital watermark information is undetectable, similar operation is performed.

The read-ahead operation illustrated in Fig. 5 is different from that illustrated in Fig. 4 in that the watermark detection ends at time (2) to determine that the copy control information indicates "copy free".

In this case, as a result of data access in seek operation "SEEK #N+j" in response to readout request "READ #N+j", the data of requested sector number #N+j is transmitted to the host computer 20, as indicated by arrows labeled "DATA #N+j".

As discussed above, when the start of a signal having digital watermark information embedded therein (the start of an MPEG video sequence in this example) is detected by the signal detection unit 22, contiguous signals are transferred to the digital watermark information detection unit 24 until digital watermark detection based on that signal ends or until the digital watermark information is determined to be undetectable. This ensures the detection reliability. The term "contiguous signals" involves a data amount necessary for detecting digital watermark information unless the continuity of the read signals is ensured. Specifically, even if data is sliced into small pieces when accessed from the host computer 20 or the like to impair the continuity of information, a data amount necessary for detecting digital watermark information can be protected against illegal operating or processing software by forcibly reading the data in a contiguous manner. For example, software aiming at avoidance of copy protection and aiming at illegal copy would be prevented.

Preferably, digital watermark detection starts when the start of a signal is detected by the signal detection unit 22 to read ahead the signal from the recording medium 2, and the read-ahead operation terminates when the digital watermark detection ends (when the digital watermark information is detected or when the digital watermark information is determined to be undetectable).

In the foregoing description, error status information is returned to the host computer 20 in copy-prohibited case or copy-restricted case. However, embodiments of the present invention are not limited this case. In order to enhance the copy restriction ability etc., it is effective to modify or limit used data, and the following forms are contemplated, by way of example:
(A) the content of data which is not transferred is made invalid; and
(B) the content of all data after illegal operation was found is made invalid.

In form (A), in one-ECC-block (32-KB) data which is not transferred, for example, when illegal copy or the like was found, all MPEG data values of a video pack are set to a predetermined value, such as "00" for mask, mute, or the like, before the data is transferred to the host computer 20.

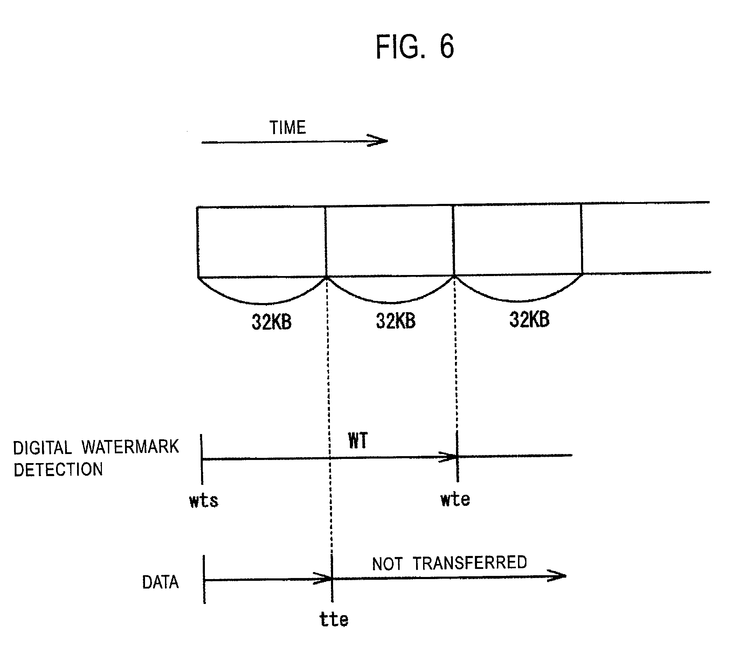

Fig. 6 shows the concept of this operation. In Fig. 6, "WT" indicates the period of watermark detection; "wts" indicates the time at which watermark detection starts; "wte" indicates the time at which watermark detection ends; and "tte" indicates the time at which data transfer ends.

In Fig. 6, at time "wte" at which watermark detection ends, the status information (such as copy-prohibited information) associated with one-ECC-block (32-KB) data is determined. The data transfer operation is performed during the watermark detection, and ends at time "tte". When the status information is referred to determine illegal copy (copy-prohibited information), the value of data which is not transferred after time "tte" is modified so as to make the data invalid before the data is transferred to the host computer 20.

In form (B), for example, once illegal copy or access is detected, all MPEG data values of subsequent video packs are set to a predetermined value such as "00" before the data is transferred to the host computer 20. That is, the value of not only data which is not transferred but all data after illegal copy (copy-prohibited information) was found is modified so as to make the data invalid before the data is transferred to the host computer 20.

In either case, when copy control information identified from digital watermark information detected by the digital watermark information detection unit 24 indicates copy-prohibited information or copy-restricted information (including a restricted number of copy generations and partial use), output or transfer of the read signal is prohibited or restricted (by a signal transmitted from the CPU 26 to the data transfer controller 16, in the example shown in Fig. 1). The term "prohibit" includes not only prohibiting the output or transfer processing for copy or playback but also transferring invalid data, as discussed above. The transferred data is not limited to data which is made invalid, but may be data which is replaced by message data (image data or audio data) to represent prohibition of illegal copy or alarm illegal copy in the form of image or audio.

In the illustrated embodiment, a video signal is read from a recording medium; however, embodiments of the present invention may also employ various signals including content information, such as an audio signal. A video or audio signal read from a recording medium is detected by a signal detection unit, and digital watermark information is detected from the signal by a digital watermark detection unit. Based on copy control information contained in the digital watermark information, output or transfer of the video or audio signal using the restriction unit 17 is prohibited or restricted.

The output restrictions based on the type of recording media and digital watermark information are discussed below in the context of a DVD-ROM (DVD read-only memory) and a DVD-R (DVD Recordable) or DVD-RW (DVD Rewritable).

Recording media are classified into read-only media and writable media, and, for example, a DVD-ROM is a read-only medium as named.

Video information has been concealed (e.g., encrypted or scrambled) in some cases, and has not been concealed in other cases.

The correspondence is shown in Table 1.

**Table 1**

| Medium Type | Copy Control Information | Data Concealment | Playback |
|---|---|---|---|
| ROM | copy free | not scrambled with CSS | allowed |
| ROM | copy once | this combination is not available | prohibited |
| ROM | copy no more | this combination is not available | prohibited |
| ROM | copy never | partially encoded with CSS | allowed |
| Recordable | copy free | not encoded and recorded with CPRM | allowed |
| Recordable | copy once | recording is unavailable in this combination | prohibited |
| Recordable | copy no more | encoded and recorded with CPRM | allowed |
| Recordable | copy never | recording is unavailable in this combination | prohibited |

In Table 1, "ROM" represents a read-only medium, and "Recordable" represents a writable (recordable) medium. The copy control information is recorded as a watermark in a disc. "CSS" is abbreviation of content scrambling system, as described above, and "CPRM" or content protection for recordable media is copyright protection technology licensed by a license authority, referred to as the 4C Entity, in which a program recordable once is scrambled and recorded. The technical keys of CPRM for DVD-R or DVD-RW recording are that ID information (Media ID) unique to a disc is employed, MKB (media key block) data is recorded in the lead-in area of a disc in reproducible form, a device key set is incorporated, and content information is encrypted using key data (media unique key) generated from Media ID, MKB, and device key set (if key data of a device fails, the device will not be used).

As is apparent from Table 1, playback of a read-only disc is prohibited when the copy control information indicates "copy once" or "copy no more". When the copy control information indicates "copy free", a read-only disc contains unscrambled data, and is playback-allowed. When the copy control information indicates "copy never", a read-only disc contains partially scrambled data, but is playback-allowed.

A writable disc is playback-prohibited when the copy control information indicates "copy once" or "copy never", and is playback-allowed when the copy control information indicates "copy free" or "copy no more".

Assuming that the medium type is not taken into consideration, basically, signal output or transfer is prohibited or restricted when the copy control information indicates "copy once", "copy no more", or "copy never".

If the disc is recordable, the recording format of CPRM-compliant discs is different from that of CPRM-incompliant discs. The details are shown in Table 2.

**Table 2**

| Medium Type | Copy Control Information | Recording Format |
|---|---|---|
| CPRM-compliant disc | copy free | encrypted or unencrypted |
| CPRM-compliant disc | copy once | recording is unavailable |
| CPRM-compliant disc | copy no more | encrypted |
| CPRM-compliant disc | copy never | no recorded |
| CPRM-incompliant disc | copy free | unencrypted |
| CPRM-incompliant disc | copy once | no recorded |
| CPRM-incompliant disc | copy no more | no recorded |
| CPRM-incompliant disc | copy never | no recorded |

As is apparent from Table 2, the recording formats differ depending upon the type of recording media or the watermark status (copy status).

It is therefore necessary to determine or identify a signal containing content information based on whether or not the signal has been concealed or based on the type of recording media. Specifically, it is necessary to determine whether or not a signal recorded in a recording medium (including a video signal and an audio signal) has been encrypted or scrambled or whether the recording medium is a writable medium or a read-only medium. It is effective to control digital watermark detection or to prohibit or restrict outputting or transferring a signal read from the recording medium, based on the content of copy control information (or status information) contained in the digital watermark information.

For example, in Fig. 1, when the disc 2 is identified as a DVD-ROM disc, the disc 2 contains data partially encoded with CSS or not. Only in the latter case, the watermark detector 21 is activated.

When the disc 2 is identified as a writable disc, the disc 2 contains data encoded with CPRM or not. In either case, the watermark detector 21 is activated (if the disc 2 contains encoded data, the digital watermark information cannot be detected by the watermark detector 21). In a CPRM-compliant "Recordable" disc, the content information is not necessarily encrypted, and the watermark detector 21 is preferably activated. If a recordable disc contains encrypted content information, the digital watermark information cannot be detected. Since unencrypted data is recorded only when the data contains a digital watermark having status information which indicates "copy free", illegal copy is found if other status information is detected.

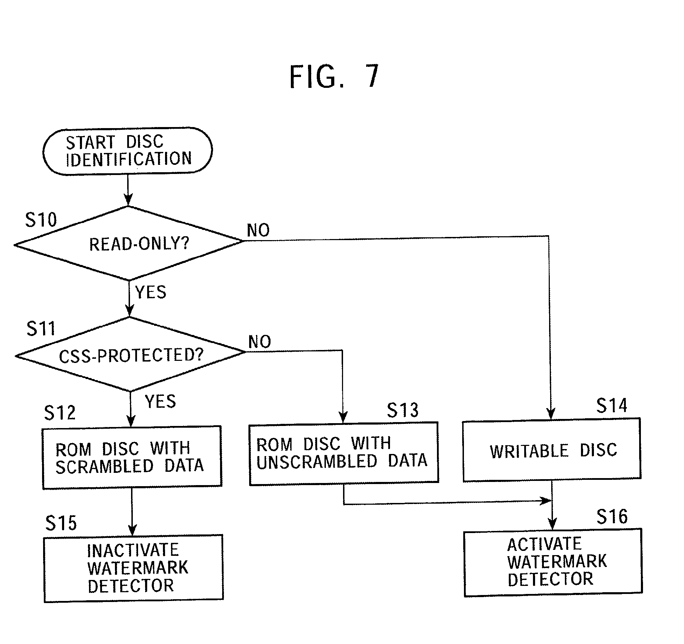

Fig. 7 is a flowchart showing a procedure of identifying a recording medium and the operation of the watermark detector 21.

In step S10, first, it is determined whether or not a disc to be processed is a read-only disc. If the disc is a DVD-ROM disc, the procedure proceeds to step S11. Otherwise, the procedure proceeds to step S14.

In step S11, it is determined whether or not the disc contains CSS-protected data. If the disc contains CSS-protected data, the procedure proceeds to step S12. Otherwise, the procedure proceeds to step S13.

In step S12, it is determined that the disc is a CSS-protected DVD-ROM disc, and the procedure proceeds to step S15, in which the watermark detector 21 is inactivated as discussed above.

In step S13, it is determined that the disc is a DVD-ROM disc with unscrambled data, and the procedure proceeds to step S16, in which the watermark detector 21 is inactivated as discussed above.

In step 314, it is determined that the disc is a writable disc, and the procedure proceeds to step S16, in which the watermark detector 21 is activated as discussed above.

The information necessary for conditional determinations in steps S10 and S11 is obtained from wobble detection information, disc identification information, etc.

Accordingly, it is preferable to control activation of a digital watermark information detection unit (the watermark detector 21) based on the type of the recording medium or whether or not encrypted data is contained.

The copy control information contained in the detected digital watermark information indicates any of "copy free", "copy once", "copy no more", and "copy never", as discussed above. When the copy control information indicates "copy free", disc playback is allowed by the drive apparatus 1, and, otherwise, output or transfer of signals read from the recording medium is prohibited or restricted as required (for example, playback is not allowed).

The restrictions on data transfer may be implemented by transmitting a control signal from the CPU 26 to the data transfer controller 16 to mask a bit stream. Specifically, the CPU 26 allows physical sector number (PSN) whose output is to be restricted to be stored, and also allows the stored physical sector number to be passed to the data transfer controller 16 to set the sector number, so that an MPEG data stream in each video pack can be masked.

In Fig. 1, data of processed ECC block and the physical sector number of that block are supplied from the decoder 10 to the watermark detector 21 via the watermark interface 18. When an I-picture is detected by the MPEG parser 23, the physical sector number "Start PSN" at the time when watermark detection starts is passed to the CPU 26.

When the watermark detector 21 terminates watermark detection, information indicating the result of the watermark detection and the physical sector number "END PSN" at the time when the watermark detection ends are passed to the CPU 26.

In this way, the CPU 26 is able to constantly grasp in which physical sector illegal copy is made based on the copy control information contained in the detected digital watermark information. When illegal copy is found, the corresponding physical sector number obtained based on the detected digital watermark is stored and is passed to the data transfer controller 16, so that a data stream in each video pack corresponding to that sector number can be masked such that logical product "00" is applied to the data value.

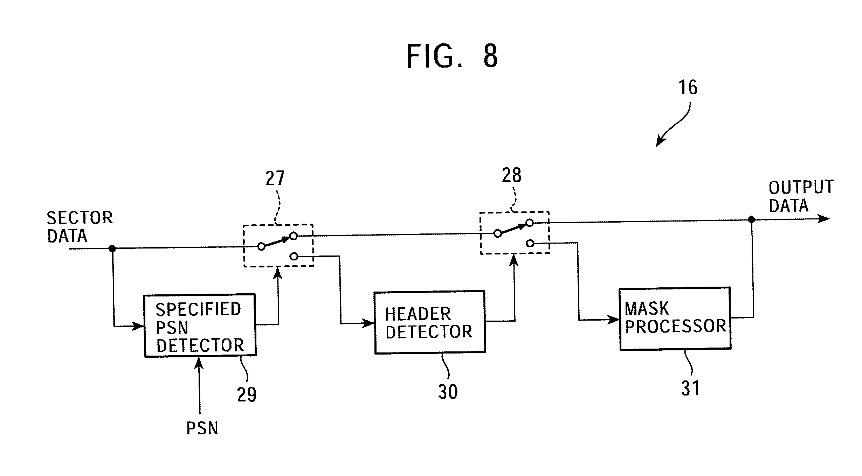

Fig. 8 illustrates the structure of the data transfer controller 16. The data transfer controller 16 includes two switches 27 and 28, a specified PSN detector 29, a header detector 30, and a mask processor 31.

First, 2-KB sector data is sent to the switch 27 and the specified PSN detector 29.

The specified PSN detector 29 specifies the state of the switch 27 based on the logical sector number (see PSN in Fig. 1) specified by the CPU 26. When the switch 27 is switched to a first state, the sector data is passed to the subsequent switch 28. When the switch 27 is switched to a second state, the sector data is passed to the header detector 30.

The header detector 30 detects the start of a video pack, and controls the state of the switch 28 based on the detection result. When the switch 28 is switched to a first state in response to a signal from the header detector 30, the sector data is output without being masked. When the switch 28 is switched to a second state, the sector data is passed to the mask processor 31 for masking, and the masked data is output.

When the start of a video pack is detected, therefore, the switch 27 should be switched to the second state. When MPEG data is to be masked, the switch 27 should be switched to the first state and the switch 28 should be switched to the second state.

In this circuitry, before transferring 2-KB sector data, the logical sector number of a transfer sector is verified with the logical sector number specified by the CPU 26 (i.e., the sector number in which the digital watermark information is detected when illegal copy is found). When no restriction is applied to the transfer data, the sector data is passed without modified; when any restriction is applied to the transfer data, however, the data is masked before being transferred.

In the case in which a disc to which video data descrambled with CSS is copied is playback-restricted, only the smallest logical sector number to be processed is specified and stored by the CPU 26, and output or transfer of all the data whose logical sector numbers exceeding the stored number are requested from the host computer 20 may be restricted. In this case, in Fig. 8, the minimum PSN is specified, and the data having PSN in excess of the minimum PSN is masked.

It is to be noted that data output or transfer should not be prohibited only because the copy control information indicates copy-prohibited information.

For example, when the recording medium 2 is a read-only medium and it is determined that all or a part of data recorded therein has been encrypted or scrambled, data output or transfer is allowed even if copy control information contained in the digital watermark information indicates copy-prohibited information. In the above-noted Table 1, a DVD-ROM disc contains data partially encoded with CSS when the copy control information indicates "copy never", but is playback-allowed. In some cases, therefore, no prohibition or restriction of outputting or transferring a signal read from a recording medium is not important.

As shown in Table 1, on the other hand, when it is determined that the recording medium 2 is a writable medium, and copy control information contained in the digital watermark information indicates copy-prohibited information or copy-allowed-predetermined-number (once in this example) information, output or transfer of a signal read from the recording medium 2 is prohibited or restricted. This is because recording is not permitted regardless of encryption.

Although an embodiment of the present invention has been discussed in the context of the data playback apparatus 1 using the buffer memory 19 with reference to Fig. 1, the present invention is not limited thereto, and a buffer memory is not necessarily used to detect digital watermark information.

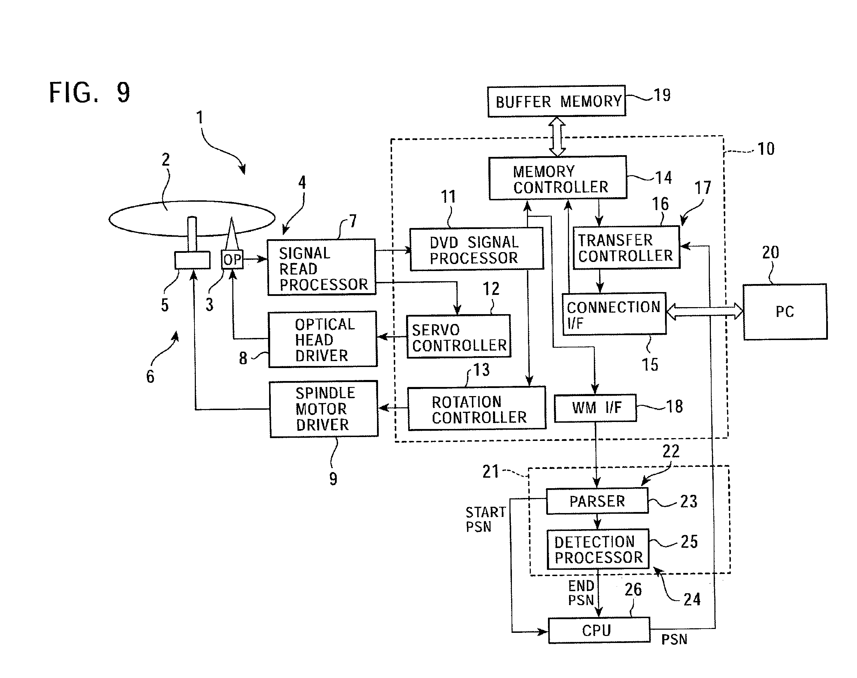

Fig. 9 illustrates a data playback apparatus 1 having such a structure.

The differences between the data playback apparatus 1 shown in Fig. 1 and the data playback apparatus 1 shown in Fig. 9 are described below.

In Fig. 9, data input to the watermark detector 21 is supplied directly from the DVD signal processor 11.

Specifically, in Fig. 1, data from the buffer memory 19 via the memory controller 14 is input to the watermark detector 21 via the watermark interface 18. In Fig. 9, in contrast, the data output from the DVD signal processor 11 is input to the watermark detector 21 via the watermark interface 18.

The structure of the remaining components is the same as that discussed above with reference to Fig. 1. The same components are designated by the same reference numerals as those in Fig. 1, and a description thereof is thus omitted.

In embodiments of the present invention, use of a buffer memory is not essential in order to detect digital watermark information. The present invention encompasses the form in which a buffer memory is not used to detect digital watermark information, as discussed with reference to Fig. 9, and the form in which a buffer memory is used to detect digital watermark information, as discussed with reference to Fig. 1.

When a buffer memory is used to detect digital watermark information, the following cases are conceivable depending upon usage of the buffer memory, by way of example:
(I) data stored in the buffer memory is used;
(II) data is stored in the buffer memory until the buffer memory is full, and the subsequent data are passed to a watermark detector instead of the buffer memory; and
(III) watermark detection also terminates when the buffer memory is full.

In case (I), advantageously, data is stored in the buffer memory, and the read overhead can be reduced in read-ahead cache.

In case (II), advantageously, the capacity of the buffer memory can be reduced, thus reducing the cost.

In case (III), advantageously, the same buffer managing mechanism as that in a traditional drive apparatus which does not have the function of detecting digital watermark information can be used to successfully achieve digital watermark detection, and great modification made to the traditional drive apparatus is not required.

In practical design of the apparatus, however, advantages and disadvantages of the above cases should be taken into account to determine whether a buffer memory is used or not and how the buffer memory is used.

As discussed above, various advantages are achieved by embodiments of the present invention.

If a readout request of random address is issued from a host computer to a drive apparatus, the drive apparatus can reliably detect digital watermark information embedded in video information. Therefore, for example, also when a writable drive for alternately repeating read and write is used, video information can be detected during the reading process, and digital watermark information embedded in the video information can be detected. Highly reliable watermark detection is thus achieved.

Embodiments of the present invention can be applied without reducing the performance of traditional drive apparatuses. For example, a DVD-video disc playback apparatus incorporating an embodiment of the present invention is not different from a traditional DVD-video disc playback apparatus since basically the same operation is performed when contiguous data is played back. In data discs (DVD-data discs) in which copy-protected video information is not typically recorded, a trigger which causes the above-described processing or operation cannot occur, leading to safety.

Generally, high-performance drive apparatuses are required for supporting high disk rotation speed. In embodiments of the present invention, however, a digital watermark can be detected in a short time in the proportion of high disk rotation speed for playback, and the automatic read-ahead operation of a drive enables reduction of the overhead. In addition, larger amount of data in video information can be used for digital watermark detection in the proportion of high disk rotation speed for playback, resulting in higher detection reliability of digital watermark information. These advantages are achieved more by higher-performance drive apparatuses, thus meeting the high-performance requirement or high playback rate.

In so far as the embodiments of the invention described above are implemented, at least in part, using software-controlled data processing apparatus, it will be appreciated that a computer program providing such software control and a storage medium by which such a computer program is stored are envisaged as aspects of the present invention.

Although particular embodiments have been described herein, it will be appreciated that the invention is not limited thereto and that many modifications and additions thereto may be made within the scope of the invention. For example, various combinations of the features of the following dependent claims can be made with the features of the independent claims without departing from the scope of the present invention.

## Claims

1. A data playback apparatus for playing back a recording medium in which a signal having digital watermark information embedded therein is recorded, the digital watermark information including copy control information, the data playback apparatus comprising:
reading means for reading a signal from the recording medium;
signal detection means for determining whether or not the signal read by the reading means is the signal having digital watermark information embedded therein; and
digital watermark information detection means for detecting the digital watermark information when the start of the signal having digital watermark information embedded therein is detected by the signal detection means.

2. A data playback apparatus according to claim 1, further comprising a controller for, when the start of the signal is detected by the signal detection means, controlling the signal read by the reading means so as to be sequentially transferred to the digital watermark information detection means until detection of the digital watermark information based on the signal ends or until the digital watermark information is determined to be undetectable.

3. A data playback apparatus according to claim 2, wherein it is determined whether or not the signal recorded in the recording medium has been encrypted or scrambled, or it is determined whether the recording medium is a writable medium or a playback-only medium, and output or transfer of the signal read from the recording medium is prohibited or restricted based on the determination result and the copy control information included in the digital watermark information.

4. A data playback apparatus according to claim 1, wherein, when the copy control information included in the digital watermark information detected by the digital watermark information detection means indicates copy-prohibited information or copy-restricted information, output or transfer of the read signal is prohibited or restricted.

5. A data playback apparatus according to claim 2, wherein, when the copy control information included in the digital watermark information detected by the digital watermark information detection means indicates copy-prohibited information or copy-restricted information, output or transfer of the read signal is prohibited or restricted.

6. A data playback apparatus according to claim 3, wherein, when the copy control information included in the digital watermark information detected by the digital watermark information detection means indicates copy-prohibited information or copy-restricted information, output or transfer of the read signal is prohibited or restricted.

7. A data playback apparatus for playing back a recording medium in which a signal having digital watermark information embedded therein is recorded, the digital watermark information including copy control information, the data playback apparatus comprising:
signal detection means for determining whether or not a signal read from the recording medium is a video or audio signal;
digital watermark information detection means for detecting the digital watermark information from the signal when a video or audio signal is detected by the signal detection means; and
restriction means for prohibiting or restricting outputting or transferring the video or audio signal based on the copy control information included in the detected digital watermark information.

8. A data playback apparatus according to claim 7, wherein it is determined whether or not the video or audio signal has been encrypted or scrambled, or it is determined whether the recording medium is a writable medium or a read-only medium; and the restriction means prohibits or restricts outputting or transferring the signal read from the recording medium based on the determination result and the copy control information included in the digital watermark information.

9. A data playback apparatus according to claim 8, wherein output or transfer of the signal read from the recording medium is not prohibited or restricted when it is determined that the recording medium is a read-only medium and the video or audio signal has been encrypted or scrambled, and when the copy control information included in the digital watermark information indicates copy-prohibited information.

10. A data playback apparatus according to claim 8, wherein output or transfer of the signal read from the recording medium is prohibited or restricted when it is determined that the recording medium is a writable medium and the copy control information included in the digital watermark information indicates copy-prohibited information or copy-allowed-predetermined-number information, the output or transfer of the signal read from the recording medium is prohibited or restricted.

11. A data playback apparatus according to claim 7, wherein the copy control information included in the digital watermark information includes information indicating any of "copy free", "copy once", "copy no more", and "copy never"; and
when the copy control information indicates "copy once" "copy no more", or "copy never", the restriction means prohibits or restricts outputting or transferring the video or audio signal read from the recording medium.

12. A data playback method of reading and playing back data from a recording medium in which a signal having digital watermark information embedded therein is recorded, the digital watermark information including copy control information, the data playback method comprising:
a reading step of reading a signal from the recording medium;
a signal detecting step of determining whether or not the read signal is the signal having digital watermark information embedded therein; and
a digital watermark information detecting step of detecting the digital watermark information when the start of the signal having digital watermark information embedded therein is detected in the signal detecting step.

13. A data playback method according to claim 12, wherein, when the start of the signal is detected in the signal detecting step, the signal read in the reading step is sequentially transferred to the digital watermark information detecting step until detection of the digital watermark information based on the signal ends or until the digital watermark information is determined to be undetectable.

14. A data playback method according to claim 13, further comprising a determining step of determining whether or not the signal recorded in the recording medium has been encrypted or scrambled, or a determining step of determining whether the recording medium is a writable medium or a playback-only medium,
wherein output or transfer of the signal read from the recording medium is prohibited or restricted based on a result of the determining step and the copy control information included in the digital watermark information.

15. A data playback method according to claim 12, wherein, when the copy control information included in the digital watermark information detected in the digital watermark information detecting step indicates copy-prohibited information or copy-restricted information, output or transfer of the read signal is prohibited or restricted.

16. A data playback method according to claim 13, wherein, when the copy control information included in the digital watermark information detected in the digital watermark information detecting step indicates copy-prohibited information or copy-restricted information, output or transfer of the read signal is prohibited or restricted.

17. A data playback method according to claim 14,
wherein, when the copy control information included in the digital watermark information detected in the digital watermark information detecting step indicates copy-prohibited information or copy-restricted information, output or transfer of the read signal is prohibited or restricted.

18. A data playback method of playing back a recording medium in which a signal having digital watermark information embedded therein is recorded, the digital watermark information including copy control information, the data playback method comprising:
a signal detecting step of determining whether or not a signal read from the recording medium is a video or audio signal;
a digital watermark information detecting step of detecting the digital watermark information from the signal when a video or audio signal is detected in the signal detecting step; and
a restricting step of prohibiting or restricting outputting or transferring the video or audio signal based on the copy control information included in the detected digital watermark information.

19. A data playback method according to claim 18, further comprising a determining step of determining whether or not the video or audio signal has been encrypted or scrambled, or a determining step of determining whether the recording medium is a writable medium or a read-only medium,
wherein output or transfer of the signal read from the recording medium based on the determination result and the copy control information included in the digital watermark information is prohibited or restricted in the restricting step.

20. A data playback method according to claim 19, wherein output or transfer of the signal read from the recording medium is not prohibited or restricted when it is determined that the recording medium is a read-only medium and the video or audio signal has been encrypted or scrambled, and when the copy control information included in the digital watermark information indicates copy-prohibited information.

21. A data playback method according to claim 19, wherein output or transfer of the signal read from the recording medium is prohibited or restricted when it is determined that the recording medium is a writable medium and the copy control information included in the digital watermark information indicates copy-prohibited information or copy-allowed-predetermined-number information, the output or transfer of the signal read from the recording medium is prohibited or restricted.

22. A data playback method according to claim 18, wherein the copy control information included in the digital watermark information includes information indicating any of "copy free", "copy once", "copy no more", and "copy never"; and
when the copy control information indicates "copy once" "copy no more", or "copy never", output or transfer of the video or audio signal read from the recording medium is prohibited or restricted in the restricting step.
